(19) Europäisches Patentamt
European Patent Office
Office européen des brevets

(11) EP 2 747 273 B1

(12) **EUROPEAN PATENT SPECIFICATION**

(45) Date of publication and mention
of the grant of the patent:
**27.05.2015 Bulletin 2015/22**

(51) Int Cl.:
***H02P 21/14*** *(2006.01)*

(21) Application number: **12198650.9**

(22) Date of filing: **20.12.2012**

(54) **Method and arrangement for torque estimation of a synchronous machine**

Verfahren und Vorrichtung zur Schätzung des Drehmoments einer Synchronmaschine

Procédé et agencement d'estimation de couple d'une machine synchrone

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.06.2014 Bulletin 2014/26**

(73) Proprietor: **Siemens Aktiengesellschaft
80333 München (DE)**

(72) Inventors:
• **Liu, Yong**
**Sheffield, S10 2FZ (GB)**
• **Wu, Lijian**
**Sheffield, S6 3NT (GB)**
• **Wu, Zhan-Yuan**
**Sheffield, S10 4BB (GB)**

(56) References cited:
• **LIU Y ET AL: "Instantaneous torque estimation in sensorless direct torque controlled brushless DC motors", CONFERENCE RECORD OF THE 2005 IEEE INDUSTRY APPLICATIONS CONFERENCE FORTIETH IAS ANNUAL MEETING 2-6 OCT. 2005 KOWLOON, HONG KONG, CHINA, IEEE, CONFERENCE RECORD OF THE 2005 IEEE INDUSTRY APPLICATIONS CONFERENCE FORTIETH IAS ANNUAL MEETING (IEEE CAT., vol. 3, 2 October 2005 (2005-10-02), pages 2140-2146, XP010842691, DOI: 10.1109/IAS. 2005.1518743 ISBN: 978-0-7803-9208-3**
• **LIU Y ET AL: "Direct torque control of brushless DC drives with reduced torque ripple", INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004, PISCATAWAY, NJ, USA,IEEE, vol. 4, 3 October 2004 (2004-10-03), pages 2390-2396, XP010735449, DOI: 10.1109/IAS.2004.1348810 ISBN: 978-0-7803-8486-6**

## Description

Field of invention

The present invention relates to a method and an arrangement for estimating a torque of a synchronous electromagnetic machine and to a method for controlling a synchronous electromagnetic machine using the estimated torque.

Art Background

US 8,080,956 B2 discloses a method of controlling a vehicle including a permanent magnet synchronous motor, wherein an output torque is estimated as a sum of a torque command and a torque difference, wherein the torque difference is determined as a function of d-axis and q-axis currents.

US 2012/0146559 A1 discloses an estimation of an actual torque in an electrical motor drive, wherein a flux estimator determines a rotor flux using a quadrature axis voltage, a measured direct axis current, a measured quadrature axis current, an angular velocity, a stator resistance and a direct axis inductance and an actual torque calculator is arranged to obtain an actual torque estimation using the calculated rotor flux, the measured direct axis current and the measured quadrature axis current.

The document by Liu et al. "Instantaneous torque estimation in sensorless direct torque controlled brushless DC motor", Conference Record of the 2005 IEEE Industry Applications Conference, vol. 3, 02 October 2005, pages 2140-2146, discloses estimation of the instantaneous electromagnetic torque, wherein a sliding mode observer is employed to estimate the non-sinusoidal back-emf waveform and a simplified extended Kalman filter is used to estimate the rotor speed.

The document by Liu et al. "Direct torque control of brushless DC drives with reduced torque ripple", 39th IAS Annual Meeting, Conference Record of the 2004 IEEE, vol. 4, 03 October 2004, pages 2390-2396, discloses application of direct torque control to brushless DC drives, wherein a torque estimation is disclosed.

In conventional systems and methods, torque estimation may have an inaccuracy and accordingly a motor or a generator may not be controlled such as to reduce noise and mechanical/electrical load acting on components of the motor or generator or in general the electromagnetic machine.

There may be a need for a method and an arrangement for estimating a torque for a synchronous electromagnetic machine, in particular motor or generator, which allows an accurate estimation of the torque which then enables to control the synchronous machine such as to reduce noise emission and load acting on components of the synchronous machine.

Summary of the Invention

The need is solved by the subject-matter of the independent claims. The dependent claims specify particular embodiments of the present invention.

According to an embodiment of the present invention, it is provided a method of estimating torque for a synchronous electromagnetic machine comprising a stator (in particular comprising teeth) having at least one winding (or plural windings or coils, comprising an electric conductor) and a rotor having a, during operation, magnetic region, the method comprising receiving a current signal (in particular comprising two components) indicative of an electrical current flowing in the winding; receiving a voltage signal (in particular comprising two components) indicative of a voltage applied to the winding; transforming the current and the voltage into quantities of a d-q-coordinate system, wherein the d-axis rotates synchronously with the rotor and the q-axis is perpendicular to the d-axis, establishing an equation .for the d-component of the voltage depending on the d-component of the current, a derivative of the d-component of the current, and a term comprising a derivative of the d-component of a magnetic flux of the magnetic region and the q-component of the flux of the magnetic region, establishing an equation for the q-component of the voltage depending on the q-component of the current, the d-component of the current, a derivative of the q-component of the current, and a term comprising a derivative of the q-component of the magnetic flux of the magnetic region and the d-component of the flux of the magnetic region, thereby taking into account higher harmonics of current and magnetic flux, estimating a d-component and a q-component of a back electromotive force based on the currents and established voltages in the d-q-coordinate system, and deriving a torque based on estimated back electromotive force in the d-q-coordinate system and current signal in the d-q-coordinate systems.

The synchronous electromagnetic machine may be a synchronous motor or a synchronous generator, in particular a generator of a wind turbine, in particular a direct drive wind power generator. Using embodiments of the present invention, noise and/or vibration generated during operation of the generator or in general the synchronous electromagnetic machine may be reduced. The synchronous electromagnetic machine may be an outer rotor machine or an inner rotor machine. The rotor may be adapted, in particular rotatingly or rotatably supported to allow rotation relative to the stator. The rotor may comprise a plurality of magnetic regions, for example a plurality of permanent magnets or a plurality of electromagnets. The stator may comprise a plurality of windings distributed across a circumferential direction. In particular, the stator may comprise three windings (or three groups of windings) corresponding to three electrical phases. The windings may be connected in a star-like configuration or in a delta configuration. The winding, in particular the three windings, may be connected to output terminals, in particular three output terminals, of a converter which may convert a variable frequency AC power stream received from the generator to a DC-power stream and which may be adapted to convert the DC-power stream to a fixed frequency AC power stream which may then be provided (in particular via a point of common coupling and one or more wind farm transformers) to a utility grid for providing electrical energy to plural consumers.

The electromagnetic machine, when configured as a generator, may have output terminals, in particular three output terminals, which may be connected to input terminals of the converter. The converter may (for the conversion of the power stream to the DC-power stream) comprise power switches, such as power transistors, in particular IGBTs, which may be switched at high frequency (much higher than the nominal grid frequency, such as 50 Hz or 60 Hz) which may result in high frequency components, in particular harmonics of the nominal grid frequency, in the current representing the power stream which is output by the generator. The torque ripple due to current harmonics may result in noise during operation of the generator, in particular operation of the wind turbine comprising the generator.

The current signal may be provided as a three-phase current signal having components for each phase and may in particular represent measured three-phase currents. The voltage signal may represent a voltage (or in particular three voltages) applied at the winding (in particular the three windings of the stator). The voltage signal may represent a measurement signal or a demanded or desired voltage.

The back electromotive force (acting between the magnetic region and the stator winding) may also refer to as counter-electromotive force and may be based on induction and may be caused by a change in the electromagnetic field and may be related to the effect of Lenz's law of electromagnetism. In particular, the back electromotive force may act against a reason which causes induction. The back electromotive force may in particular be estimated taking into account that the current and/or voltage is not purely sinusoidal. Deriving the torque may comprise to calculate the torque depending on the estimated back electromotive force and the current or current signal.

In particular, no assumption may be imposed that the current and/or the voltage is purely sinusoidal. In particular, higher harmonics of the current and/or the voltage may be taken into account. Thereby, also the estimated torque may comprise higher harmonics, i.e. frequencies which may be equal to a multiple or an integer multiple of a basic frequency, such as the fundamental frequency of the electrical machine.

Thereby, the torque may be estimated in a more accurate manner. In particular, since a torque comprising ripples may be a main cause of noise emission, estimation of the torque in a more accurate manner may then also allow to inject counteracting currents or apply counteracting voltage, in order to reduce the noise and/or vibration originating from the torque ripple.

According to an embodiment of the present invention, the back electromotive force comprises (in particular in a d-q coordinate system) a term of a magnetic flux of the magnetic region and a term of a time derivative of the magnetic flux, in particular taking non-sinusoidal current and magnet flux into account.

Also the magnetic flux may be not purely sinusoidal and this non-sinusoidal property of the magnetic flux may be taken into account. In particular, due to a shape of the magnetic region, the magnetic flux may not be purely sinusoidal when the synchronous machine is in operation, i.e. when the rotor is rotating. By taking a non-sinusoidal magnetic flux into account, the estimation of the torque may be more accurate.

According to an embodiment of the present invention, the method further comprises transforming the current and the voltage into quantities of a d-q-coordinate system and estimating a d-component and a q-component of the back electromotive force.

In particular, a three-phase current and a three-phase voltage may be transformed in the d-q-coordinate system, wherein the d-axis rotates synchronously with the rotor and the q-axis is perpendicular to the d-axis. For transforming for example the Park transformation may be applied. In the d-q-coordinate system, the quantities may be related to each other in a more simple manner and purely sinusoidal quantities may become DC quantities in the d-q-coordinate system, while non-sinusoidal quantities (in the three-phase system) become non-DC-quantities in the d-q-coordinate system. In particular, taking into account a derivative of a quantity in the d-q-coordinate system may indicate that, harmonics different from the basic frequency, i.e. higher harmonics, are taken into account, and in particular that non-sinusoidal behaviour of that quantity is taken into account.

According to an embodiment of the present invention, the method further comprises establishing an equation for the d-component of the voltage depending on the d-component of the current, a derivative of the d-component of the current, and a term comprising a derivative of the d-component of a magnetic flux of the magnetic region and the q-component of the flux of the magnetic region; establishing an equation for the q-component of the voltage depending on the q-component of the current, the d-component of the current, a derivative of the q-component of the current, and

a term comprising a derivative of the q-component of the magnetic flux of the magnetic region and the d-component of the flux of the magnetic region, thereby taking into account higher harmonics of current and magnetic flux.

Establishing the equation for the d-component of the voltage and also for the q-component of the voltage may then enable to derive an equation for the torque. In particular, the equation for the torque may comprise derivatives of the magnetic flux in the d-axis and also the q-axis. Conventional equations for the voltage may not comprise derivatives of the magnetic flux. Including the derivative or derivatives of the magnetic flux into the equation for the voltage may enable to capture higher harmonics of the current and the magnetic flux. Thereby, an accuracy of the estimation of the torque may be enhanced.

According to an embodiment of the present invention, the d-component of the back electromotive force comprises a term of the q-component of the magnetic flux and a term of a time derivative of the d-component of the magnetic flux, wherein the q-component of the back electromotive force comprises a term of the d-component of the magnetic flux and a term of a time derivative of the q-component of the magnetic flux and a term of the d-component of the current multiplied by a difference between the d-component and the q-component of an inductance of the winding (and further in particular multiplied by an electric frequency of the rotor).

Defining and employing the back electromotive force may simplify the calculations. In particular, also the back electromotive force may comprise higher harmonics which may be captured by taking into account derivatives of the magnetic flux.

According to an embodiment of the present invention, the torque is derived to be proportional to sum of the q-component of the estimated back electromotive force times the q-component of current and the d-component of the estimated back electromotive force times the d-component of current.

In particular, the torque may be derived as a function of the back electromotive force and the current, in particular forming a scalar product between the back electromotive force (having components in the d-axis and the q-axis) and the current (also having components in the d-axis and the q-axis).

Thereby, estimation of the torque may be simplified while maintaining enhancement of the accuracy.

According to an embodiment of the present invention, estimating the back electromotive force comprises employing a state observer technique, in particular application of a sliding mode observer.

A state observer technique may comprise setting up a state vector describing the state of the system under examination. The state may change with time and the state observer technique may comprise setting up one or more governing equations, such as a differential equation in the established state vector. A sliding mode observer may be an observer observing the state in a time window which moves when the time progresses. Thereby, a simple manner for implementing the method may be provided.

According to an embodiment of the present invention, employing the state observer technique comprises establishing a state vector (x) including current and back electromotive force, in particular taking into account back electromotive force of sixth order.

The state vector may in particular comprise or be a sixth component vector including the d-component of the current, the q-component of the current, a d-component of a fundamental back electromotive force, a q-component of a fundamental back electromotive force, a d-component of a sixth order back electromotive force, and a q-component of a sixth order back electromotive force. Further, the voltage having components in the d-axis and the q-axis may serve as an input vector. The voltage may thereby represent a demanded or desired voltage or a measured voltage.

According to an embodiment of the present invention, employing the state comprises establishing a differential equation in the state vector, wherein the differential equation includes the voltage.

The differential equation may be a first order differential equation in the state vector. The differential equation may employ relationships between the voltage and the current and the magnetic flux as explained above. In particular, an error between measured and estimated current may be used to construct sliding mode surfaces. Thereby, the back electromotive force may be derived from some components of the state vector after solving the differential equation.

According to an embodiment of the present invention, the method further comprises solving the differential equation for the state vector, in order to derive the back electromotive force.

The back electromotive force may in particular comprise a constant term, in particular the purely sinusoidal component and a sixth order term or an even higher order term, such as a twelfth order term. The higher order term may represent the back electromotive force ripple which may result in the torque ripple.

In particular, solving the differential equation may be performed in a fast manner such as to provide the estimated torque in a continuous manner instantaneously (online) during rotation of the rotor, such that an offline calculation of the torque is not required. In particular, calculation of the estimated torque may be finished within a time interval which may be much less than an inverse of a sixth order of the generator fundamental frequency, as the estimator is executed at the controller frequency, or sampling frequency.

According to an embodiment of the present invention, the current signal relates to a measured current, in particular measured three-phase current, wherein the voltage signal in particular relates to a demanded or measured voltage, further in particular three phase voltage. Thereby, the current signal and the voltage signal may be obtained in a simple manner.

According to an embodiment of the present invention, estimating the torque is further based on parameters of the synchronous machine, in particular inductances in d-axis and q-axis of winding and/or resistance of winding and/or mechanical rotor speed.

In particular, the inductance in the d-axis and the inductance in the q-axis of the stator winding may be different from each other. In another embodiment the two inductances may be equal to each other. Thereby, a broad variety of electrical machines may be supported.

According to an embodiment of the present invention it is provided a method for controlling a synchronous electromagnetic machine comprising a stator having at least one winding and a rotor having a, during operation, magnetic region, the method comprising estimating a torque according to a method according to an embodiment as explained above instantaneously during operation; deriving a voltage based on the estimated when the accuracy of the torque is improved compared to conventional methods, also the synchronous electromagnetic machine may be controlled in a more accurate manner, in order to reduce noise emissions or load, when the control of the machine is based on the estimated torque. In particular, the machine may be controlled by injecting particulare currents depending on the estimated torque, wherein the currents in particular may vary in accordance or counteracting to the torque ripples determined according to the estimation of the torque.

It should be understood that features individually or in any combination disclosed, described, provided or mentioned in the context of a method of estimating a torque of a synchronous electromagnetic machine may also applied to an arrangement for estimating a torque for a synchronous electromagnetic machine according to an embodiment of the present invention and vice versa.

According to an embodiment of the present invention, it is provided an arrangement for estimating a torque for a synchronous electromagnetic machine comprising a stator having at least one winding and a rotor having a, during operation, magnetic region, the arrangement comprising an input terminal for receiving a current signal indicative of an electrical current flowing in the winding and for receiving a voltage signal indicative of a voltage applied to the winding, and a procesor adapted to transform, the current, and the voltage into quantities of a d-q-coordinate system, wherein the d-axis rotates synchronously with the rotor and the q-axis is perpendicular to the d-axis, to establish an equation for the d-component of the voltage depending on the d-component of the current, a derivative of the d-component of the current; and a term comprising a derivative of the d-component of a magnetic flux of the magnetic region and the q-component of the flux of the magnetic region, to establish an equation for the q-component of the voltage depending on the q-component of the current, the d-component of the current, a derivative of the q-component of the current, anda term comprising a derivative of the q-component of the magnetic flux of the magnetic region and the d-component of the flux of the magnetic region, thereby taking into account higher harmonics of current and .magnetic flux, to estimate a d-component and a q-component of a back electromotive force based on the currents and the established voltages in the d-q-coordinate system and to derive a torque based on estimated back electromotive force in the d-q-coordinate system and the current signal in the d-q-coordinate system.

The electromagnetic machine may for example be a permanent magnet synchronous machine, in particular a generator of a wind turbine.

The aspects defined above and further aspects of the present invention are apparent from the examples of embodiment to be described hereinafter and are explained with reference to the

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Brief Description of the Drawings

The embodiments of the present invention are now described with reference to the accompanying drawings. The invention is not limited to the illustrated or described embodiments.

Fig. 1 schematically illustrates a method of estimating a torque according to an embodiment of the present invention;

Fig. 2 illustrates a graph showing a torque estimated according to an embodiment of the present invention;

Fig. 3 illustrates a graph showing a torque derived by a conventional offline simulation; and

Fig. 4 schematically illustrates an arrangement for estimating a torque according to an embodiment of the present invention.

Detailed Description

The present invention relates to estimation of the instantaneous torque and torque ripple of motors/generators, in particular permanent magnet machines. The torque ripple of the direct drive (DD) wind power generator can result in unacceptable level of noise and vibration. Preferably, the torque ripple can be reduced at the design stage of the generator. However, it is practically difficult because of the manufacture tolerance, non uniform material, and structure deformation. Hence, the control method should be applied to further reduce the torque ripple.
Instantaneous torque estimation may be of importance for a better control of permanent magnet machines. Not only average torque but also AC components of electromagnetic torque pulsation estimation might be very useful in a high performance control.

In theory, a permanent magnet machine (motor/generator) with the sinusoidal flux distribution and sinusoidal currents may produce constant torque without any torque ripple. In practice, the flux distribution and currents of the permanent magnet machines may not be pure sinusoidal with full of harmonics which results in significant torque ripple, e.g. 6th order harmonic torque ripple.

Torque ripple may be controlled and compensated by injecting the harmonic current. The torque produced by the harmonic current can be controlled to cancel out the original torque ripple. Hence, the optimal harmonic current may be needed to be selected for the minimization of the corresponding torque ripple. The criterion of the harmonic current optimization would be based on an appropriate feedback signal (e.g. measured torque ripple signal).

The torque ripple controller, as described below, using the estimated torque (obtained according to an embodiment of the present invention, as described below) as feedback signal may not require any hardware investment and it may a more reliable and cost-effective method. A method according to an embodiment of the present invention may present how to estimate electromagnetic torque with particular emphasis of torque ripple estimation in a permanent magnet machine control system.

Embodiments of the present invention address the technique of instantaneous torque estimation which may include both average and ripple components of the electromagnetic torque. Unlike conventional torque estimation techniques in which only fundamental components are considered in the machine model and mathematic equations, therefore, the torque estimation may be for the DC torque component mainly without fully considering harmonics. For a reference, the machines model and torque equations based on the fundamental component are given as:

$$u_d = R_s i_d + L_d \frac{di_d}{dt} - \omega_e L_q i_q \qquad\qquad (\text{eq.1})$$

$$u_q = R_s i_q + L_q \frac{di_q}{dt} + \omega_e L_d i_d + \omega_e \psi_{rd} \qquad\qquad (\text{eq.2})$$

$$T_e = \frac{3}{2}\frac{p}{2}\left[\psi_{rd} i_q + (L_d - L_q)i_d i_q\right] = \frac{3}{2}\frac{p}{2}\left(\psi_{sd} i_q - \psi_{sq} i_d\right) \qquad\qquad (\text{eq.3})$$

Where

$$\psi_{sd} = L_d i_d + \psi_{rd} = L_d i_d + \psi_m \qquad\qquad (\text{eq.4})$$

$$\psi_{sq} = L_q i_q + \psi_{rq} = L_q i_q \qquad\qquad (\text{eq.5})$$

$L_d$, $L_q$ are the d-axis and q-axis inductances, respectively; $\psi_{rd}$ and $\psi_{rq}$ are d-axis and q-axis rotor flux-linkage; respectively. $p$ is the number of poles; $R_s$ is stator resistance; $\psi_m$ is peak value of the sinusoidal flux linkage. $\omega_e$ is the electrical speed.

To represent the flux and current harmonic components, the voltage and torque equations are modified according to an embodiment of the present invention. As will be see in the equation (6)~(8), by adding three items which represent harmonic components into the voltage and torque equations, the torque ripple produced by the interaction of flux and current fundamental and their harmonics may be fully taken into account.

$$u_d = R_s i_d + L_d \frac{di_d}{dt} - \omega_e L_q i_q + \frac{d\psi_{rd}}{dt} - \omega_e \psi_{rq} \qquad \qquad (\text{eq.6})$$

$$u_q = R_s i_q + L_q \frac{di_q}{dt} + \omega_e L_d i_d + \omega_e \psi_{rd} + \frac{d\psi_{rq}}{dt} \qquad \qquad (\text{eq.7})$$

$$T_e = \frac{3}{2}\frac{p}{2}\left[(\frac{d\psi_{rd}}{d\theta_e} - \psi_{rq})i_d + (\frac{d\psi_{rq}}{d\theta_e} + \psi_{rd})i_q + (L_d - L_q)i_d i_q\right] \qquad \qquad (\text{eq.8})$$

From equations (6) and (7), the voltage equations can be rewritten as:

$$\frac{di_d}{dt} = -\frac{R_s}{L_d}i_d + \frac{\omega_e L_q}{L_d}i_q - \frac{u_d}{L_d} - \frac{1}{L_d}\frac{d\psi_{rd}}{dt} + \frac{1}{L_d}\omega_e \psi_{rq} \qquad \qquad (\text{eq.9})$$

$$\frac{di_q}{dt} = -\frac{R_s}{L_q}i_q - \frac{\omega_e L_q}{L_q}i_d - \frac{u_q}{L_q} - \frac{1}{L_q}(L_d - L_q)\omega_e i_d - \frac{1}{L_q}\omega_e \psi_{rd} - \frac{1}{L_q}\frac{d\psi_{rq}}{dt} \qquad \qquad (\text{eq.10})$$

In order to estimate the electromagnetic torque including the reluctance torque, the d- and q-axis extended back-emfs may be defined as:

$$e_d = \frac{d\psi_{rd}}{dt} - \omega_e \psi_{rq} \qquad \qquad (\text{eq.11})$$

$$e_q = \frac{d\psi_{rq}}{dt} + \omega_e \psi_{rd} + (L_d - L_q)\omega_e i_d \qquad \qquad (\text{eq.12})$$

It should be noted that the equivalent excited voltage by rotor saliency has been added in the q-axis in equation (12) as the part of the extended back-emf.

As a result, the electromagnetic torque including the reluctance torque can be calculated as:

$$T_e = \frac{3}{2}\frac{p}{2}\frac{1}{\omega_e}\left(e_d i_d + e_q i_q\right) = \frac{3}{2}\frac{1}{\omega_r}\left(e_d i_d + e_q i_q\right) \qquad \qquad (\text{eq.13})$$

where $\omega_r$ is the mechanical rotor speed of the machine.

Many state observer techniques may be employed to estimate the extended back-emfs. By way of example, according to an embodiment of the present invention, a sliding mode observer is demonstrated to validate the effectiveness of the scheme.

The d- and q-axis currents and extended back-emfs DC components and their harmonics may be chosen as the state-variables. For instance, by considering extended back-emf DC components and the 6th order components as the state-variables and other high order harmonic components as disturbances, the extended back-emfs have the following form:

$$e_d = e_{d0} + e_{d6f} \qquad \qquad (\text{eq.14})$$

$$e_q = e_{q0} + e_{q6f} \qquad \qquad (\text{eq.15})$$

The differential of the extended back-emf DC components and the 6th order components may be:

$$\dot{e}_{d0} = 0 \qquad\qquad (eq.16)$$

$$\dot{e}_{q0} = 0 \qquad\qquad (eq.17)$$

$$\dot{e}_{d6f} = -6\omega_e e_{q6f} \qquad\qquad (eq.18)$$

$$\dot{e}_{q6f} = 6\omega_e e_{d6f} \qquad\qquad (eq.19)$$

and then the following state-variable equations can be established:

$$\dot{x} = Ax + Bu \qquad\qquad (eq.20)$$

where $x = [i_d, i_q, e_{d0}, e_{q0}, e_{d6f}, e_{q6f}]^T$ is the vector of state-variables and $u = [u_d, u_q]^T$ is the input vector.

$$y = Cx \qquad\qquad (eq.21)$$

where $y = [i_d, i_q]^T$ is the output vector.

Therefore,

$$A = \begin{bmatrix} -\dfrac{R_s}{L_d} & \dfrac{\omega_e L_q}{L_d} & -\dfrac{1}{L_d} & 0 & -\dfrac{1}{L_d} & 0 \\ -\omega_e & -\dfrac{R_s}{L_q} & 0 & -\dfrac{1}{L_q} & 0 & -\dfrac{1}{L_q} \\ 0 & 0 & 0 & 0 & 0 & 0 \\ 0 & 0 & 0 & 0 & 0 & 0 \\ 0 & 0 & 0 & 0 & 0 & -6\omega_e \\ 0 & 0 & 0 & 0 & 6\omega_e & 0 \end{bmatrix} \qquad (eq.22)$$

$$B = \begin{bmatrix} \dfrac{1}{L_d} & 0 \\ 0 & \dfrac{1}{L_q} \\ 0 & 0 \\ 0 & 0 \\ 0 & 0 \\ 0 & 0 \end{bmatrix} \qquad\qquad (eq.23)$$

$$C = \begin{bmatrix} 1 & 0 & 0 & 0 & 0 & 0 \\ 0 & 1 & 0 & 0 & 0 & 0 \end{bmatrix} \qquad\qquad (eq.24)$$

The sliding mode observer may be constructed as:

$$\dot{\hat{x}} = A\hat{x} + Bu + K sign(y - C\hat{x}) \qquad\qquad (eq.25)$$

with

$$sign(\sigma) = \begin{cases} 1 & \text{if } \sigma > 0 \\ 0 & \text{if } \sigma = 0 \\ -1 & \text{if } \sigma < 0 \end{cases} \qquad (eq.26)$$

where K is the gain matrix.

Due to the symmetry of the d and q components in the state-variable equations, K can be assumed to have the following form:

$$K = \begin{bmatrix} k_1 & 0 \\ 0 & k_1 \\ k_2 & 0 \\ 0 & k_2 \\ k_3 & 0 \\ 0 & k_3 \end{bmatrix} \qquad (eq.27)$$

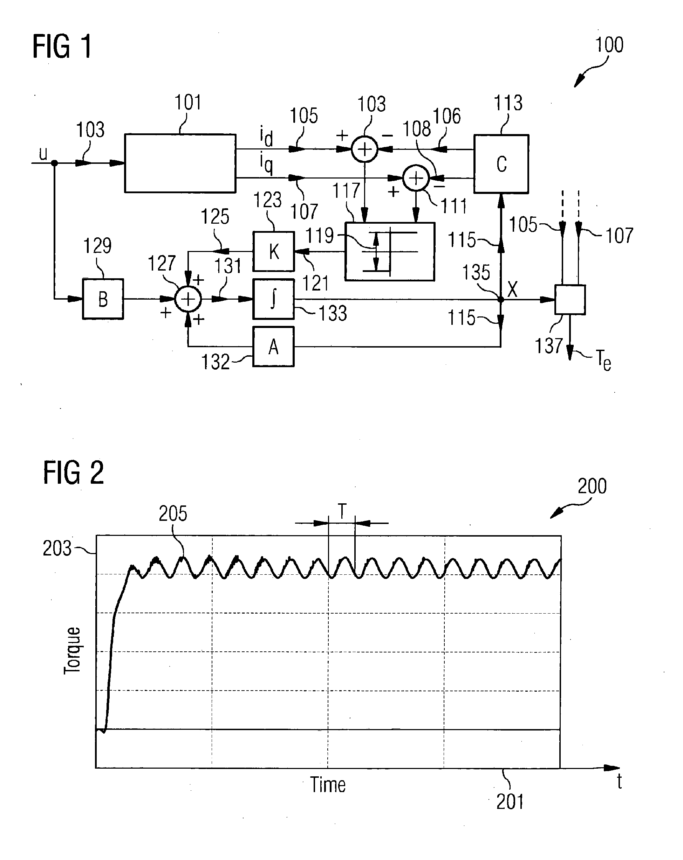

Fig. 1 illustrates a method 100 (embodied as sliding mode observer, compare equation (25)) of estimating a torque for a synchronous electromagnetic machine (or electrical machine, in particular permanent magnet machine) 101 according to an embodiment of the present invention. The synchronous electromagnetic machine 101 comprises a not illustrated stator having at least one winding and a rotor having a, during operation, magnetic region. The machine 101 may in particular be a permanent magnet machine having three windings to provide three electric phases or three groups of windings supporting three electric phases.

A voltage signal 103 (u) is applied to the stator winding and in particular a three-phase voltage signal 103 is applied to three windings of the stator of the machine 101. The rotor of the synchronous machine 101 is rotating and induces in the winding or in particular the three windings a current in three phases which is then transformed to obtain a d-component $i_d$ and a q-component iq of a stator winding current which is also referred to as current signals 105, 107. The current signals 105, 107 representing the d-component and the q-component of the stator winding current are supplied to arithmetic addition elements 109, 111 to which also the state vector x (defined above) multiplied by the multiplication coefficient C is supplied which is performed by the multiplication element 113.

The state vector x is also referred to or labelled by reference sign 115. The state vector x in particular comprises a d-component and a q-component of a back of an electromotive force (back-EMF), as defined above. The differences of the signals 105 and 106 and between the signals 107 and 108, respectively, are supplied to a signum function element 117 extracting the sign of the difference as defined in the equation (26). The output of element 117 labelled by reference sign 121 is supplied to a multiplication element 123 multiplying the sign of the difference by the constant K resulting in the signal 125 which is provided to an addition element 127. Also to the addition element 127, the voltage u multiplied by the constant B (performed in the multiplication element 129) is supplied. Further is supplied to the addition element 127 the state vector x (115) multiplied by the constant A performed within the multiplication element 132. The result of the summation using the addition element 127 is referred to as 131 which signal is then integrated by the integration element 133 to result in the state vector x which is output at the node 135. Thereby equation (25) as defined above is implemented.

The state vector x is supplied to the processing element 137 to which also the d-component 105 and the q-component 107 of the current are supplied. The processing element 137 derives from the state vector x and the currents $i_d$ (105) and $i_q$ (107) the torque $T_e$ according to equation (13) above.

The estimated torque $T_e$ may comprise depending on the properties of the currents 105 and 107, in particular depending on whether the currents 105, 107 comprise non-sinusoidal components or whether the d-component or the q-component comprise non-constant terms, also ripples of the torque, in particular ripples corresponding to a sixth order.

Fig. 1 may also represent an exemplary block diagram of the sliding mode observer according to an embodiment of the present invention. The error between the measured and estimated currents is used to construct sliding mode surfaces. The estimated extended back-emf values are driven to converge to the real values. In this way, the extended back-emfs can be estimated and instantaneous electromagnetic torque can be calculated for the permanent magnet machines.

The method may have the following features:

a) The voltage and electromagnetic torque equations may be modified to take flux and current harmonics into account.
b) Not only the average electromagnetic torque but also the torque ripple may be estimated simultaneously.

c) The voltage associate with the rotor saliency and the q-axis back-emf together may be defined as the extended back-emfs in the q-axis for the state variables of the observer.

d) The torque estimation may be suitable for both saliency and non-saliency permanent magnetic machines as the reluctant torque may be considered and included the torque calculation.

e) The extended back-emfs DC components and their harmonics may be selected as the state-variables.

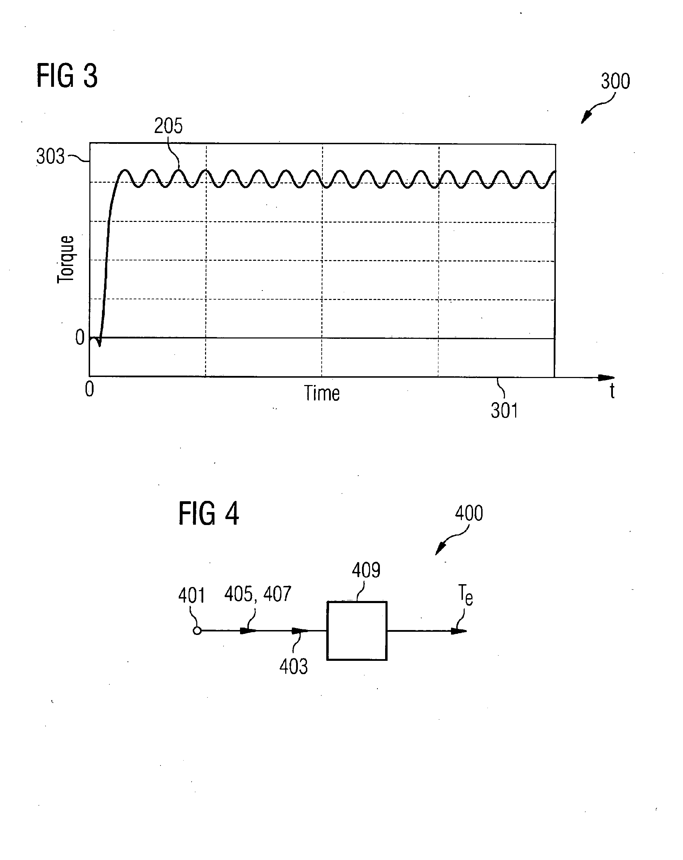

Fig. 2 illustrates a graph 200 wherein an abscissa 201 indicates the time t and an ordinate 203 indicates the torque estimated using the method 100 illustrated in Fig. 1, in particular using the arrangement illustrated in Fig. 4.

As can be seen from the curve 205 illustrating the estimated torque $T_e$ output from the processing element 137 of the method 100, the torque comprises a constant term which is in the illustrated example of the average torque and further comprises an oscillating component having a repetition time period T corresponds to a frequency of six times of fundamental (electrical) frequency of the electrical machine.

Fig. 3 illustrates a graph 300, wherein an abscissa 301 denotes the time t while an ordinate 303 denotes a torque simulated by a finite element calculation procedure which has been performed offline, i.e. while the machine is not in operation. The calculation to derive the curve 305 require extensive computations and prolonged computation time. However, as can be appreciated from the shape of the curve 205 in Fig. 2 reflecting the estimated torque and on the other hand the curve 305 reflecting the offline simulated torque, that the torque estimated using a method according to an embodiment of the present invention nicely resembles the curve 305 obtained by the expensive time-consuming simulation technique. Thereby, it is confirmed that the estimation of the torque according to a method according to an embodiment of the present invention is suitable and accurate even for estimating torque ripple. In particular, both average torque and torque ripple (e.g. 6th order torque ripple) have been successfully estimated.

Fig. 4 schematically illustrates an arrangement 400 for estimating a torque for a synchronous electromagnetic machine according to an embodiment of the present invention. The arrangement 400 comprises an input terminal 401 for receiving a current signal 405, 407 which is indicative of an electric current flowing in the winding and for receiving a voltage signal 403 which is indicative of a voltage applied to the winding. The arrangement 400 further comprises a processor 409 which is adapted to estimate a back electromotive force based on the current signals 405, 407 and the voltage signal 403 and to derive a torque $T_e$ based on the estimated back electromotive force and the current signals 405, 407.

According to an embodiment of the present invention, the estimated torque $T_e$ (as output by the arrangement 400 illustrated in Fig. 4 or estimated by the method 100 illustrated in Fig. 1) may for example be used to derive control signals (such as voltage or current) to be supplied to the synchronous electromagnetic machine 101, in order to reduce a torque ripple comprised in the estimated torque $T_e$.

1) The proposed method may be easily implemented with software programming for permanent magnet machines to estimate instantaneous electromagnetic torque.

2) Torque ripple due to both of the non-sinusoidal flux distribution and non-ideal sinusoidal current may be fully taken into account.

3) The reluctant torque may be included into the torque estimation by defining the extended back-emfs.

4) Contrast to a feedback signal from a real sensor, the proposed method may require no additional hardware investment. The use of estimated torque ripple may be reliable and cost-effective way for a feedback signal of the torque ripple controller to compensate torque ripple and reduce noise and vibrations.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1.  Method (100) of estimating a torque for a synchronous electromagnetic machine (101) comprising a stator having at least one winding and a rotor having a, during operation, magnetic region, the method comprising:

    receiving a current signal ($i_d$, $i_q$, 105, 107) indicative of an electrical current flowing in the winding;
    receiving a voltage signal ($u_d$, $u_q$, 103) indicative of a voltage applied to the winding;
    transforming the current and the voltage into quantities of a d-q-coordinate system, wherein the d-axis rotates synchronously with the rotor and the q-axis is perpendicular to the d-axis;
    establishing an equation for the d-component ($u_d$) of the voltage depending on the d-component ($i_d$) of the current;

a time derivative of the d-component ($i_d$) of the current; and

a term comprising a time derivative of the d-component ($\psi_{rd}$) of a magnetic flux of the magnetic region and the q-component ($\psi_{rq}$) of the flux of the magnetic region;

establishing an equation for the q-component ($u_q$) of the voltage depending on

the q-component of the current ($i_q$);

the d-component of the current ($i_d$);

a time derivative of the q-component ($i_q$) of the current; and

a term comprising a time derivative of the q-component ($\psi_{rq}$) of the magnetic flux of the magnetic region and the d-component ($\psi_{rd}$) of the flux of the magnetic region, thereby taking into account higher harmonics of current and magnetic flux;

estimating a d-component and a q-component of a back electromotive force ($e_d$, $e_q$) based on the currents ($i_d$, $i_q$) and the established voltages ($u_d$, $u_q$) in the d-q-coordinate system; and

deriving the torque ($T_e$) based on the estimated back electromotive force ($e_d$, $e_q$) in the d-q-coordinate system and the current signal (id,iq) in the d-q-coordinate system.

**2.** Method according to claim 1, wherein the back electromotive force ($e_d$, $e_q$) comprises a term of a magnetic flux ($\psi_{rd}$, $\psi_{rq}$) of the magnetic region and a term of a time derivative of the magnetic flux ($\psi_{rd}$, $\psi_{rq}$).

**3.** Method according to claim 2, wherein the term of the time derivative of the magnetic flux ($\psi_{rd}$, $\psi_{rq}$) takes non sinusoidal current and magnet flux into account.

**4.** Method according to one of claims 1 to 3,
wherein the d-component ($e_d$) of the back electromotive force comprises a term of the q-component ($\psi_{rq}$) of the magnetic flux and a term of a time derivative of the d-component ($\psi_{rd}$) of the magnetic flux,
wherein the q-component ($e_q$) of the back electromotive force comprises a term of the d-component ($\psi_{rd}$) of the magnetic flux and a term of a time derivative of the q-component ($\psi_{rq}$) of the magnetic flux and a term of the d-component ($i_d$) of the current multiplied by a difference ($L_d$-$L_q$) between the d-component ($L_d$) and the q-component ($L_q$) of an inductance of the winding.

**5.** Method according to one of claims 1 to 4,
wherein the torque ($T_e$) is derived to be proportional to sum of
the q-component ($e_q$) of the estimated back electromotive force times the q-component ($i_q$) of current and
the d-component ($e_d$) of the estimated back electromotive force times the d-component ($i_d$) of current.

**6.** Method according to one of claims 3 to 5,
wherein estimating the back electromotive force comprises:

employing a state observer technique, in particular application of a sliding mode observer.

**7.** Method according to claim 6, wherein employing the state observer technique comprises:

establishing a state vector ($x$) including current and back electromotive force, in particular taking into account back electromotive force of sixth order ($e_{d6f}$, $e_{q6f}$).

**8.** Method according to claim 6 or 7,
wherein employing the state comprises:

establishing a differential equation (eq.25) in the state vector ($x$), wherein the differential equation includes the voltage ($u$).

**9.** Method according to claim 8, further comprising:

solving the differential equation for the state vector ($x$), in order to derive the back electromotive force ($e_d$, $e_q$).

**10.** Method according to one of the preceding claims,
wherein the current signal (105,107,$i_d$,$i_q$) relates to a measured current, in particular measured three phase current,
wherein the voltage signal (103, u) in particular relates to a demanded or measured voltage, further in particular three phase voltage.

**11.** Method according to one of the preceding claims, wherein estimating the torque is further based on parameters of the synchronous machine, in particular inductances in d-axis ($L_d$) and q-axis ($L_q$) of winding and/or resistance ($R_s$) of winding and/or mechanical rotor speed ($\omega_m$).

**12.** Method for controlling a synchronous electromagnetic machine (101) comprising a stator having at least one winding and a rotor having a, during operation, magnetic region, the method comprising:

estimating a torque ($T_e$) according to a method of one of the preceding claims instantaneously during operation;
deriving a voltage based on the estimated torque, in order to reduce a torque ripple; and
applying the voltage to the winding of the stator.

**13.** Arrangement (400) for estimating a torque ($T_e$) for a synchronous electromagnetic machine (101) comprising a stator having at least one winding and a rotor having a, during operation, magnetic region, the arrangement comprising:

an input terminal (401) adapted
for receiving a current signal (id, iq, 405, 407) indicative of an electrical current flowing in the winding and
for receiving a voltage signal (ud, uq, 403) indicative of a voltage applied to the winding; and
a processor (409) adapted
to transform the current and the voltage into quantities of a d-q-coordinate system, wherein the d-axis rotates synchronously with the rotor and the q-axis is perpendicular to the d-axis,
to establish an equation for the d-component ($u_d$) of the voltage depending on
the d-component ($i_d$) of the current;
a time derivative of the d-component ($i_d$) of the current; and
a term comprising a time derivative of the d-component ($\psi_{rd}$) of a magnetic flux of the magnetic region and the q-component ($\psi_{rq}$) of the flux of the magnetic region;
to establish an equation for the q-component ($u_q$) of the voltage depending on
the q-component of the current ($i_q$) ;
the d-component of the current ($i_d$);
a time derivative of the q-component ($i_q$) of the current; and
a term comprising a time derivative of the q-component ($\psi_{rq}$) of the magnetic flux of the magnetic region and the d-component ($\psi_{rd}$) of the flux of the magnetic region, thereby taking into account higher harmonics of current and magnetic flux;
to estimate a d-component and a q-component of a back electromotive force ($e_q$, $e_d$) based on the currents ($i_d$, $i_q$) and the established voltage ($u_d$, $u_q$) in the d-q-coordinate system, and
to derive a torque ($T_e$) based on the estimated back electromotive force ($e_d$, $e_q$) in the d-q-coordinate system and the current signal ($i_d$, $i_q$) in the d-q-coordinate system.

**Patentansprüche**

**1.** Verfahren (100) zur Schätzung eines Drehmoments für eine elektromagnetische Synchronmaschine (101), die einen Stator mit mindestens einer Wicklung und einen Rotor, der einen während des Betriebs magnetischen Bereich aufweist, umfasst, wobei das Verfahren umfasst:

Empfangen eines Stromsignals ($i_d$, $i_q$, 105, 107), das hinsichtlich eines in der Wicklung fließenden elektrischen Stroms indikativ ist;
Empfangen eines Spannungssignals ($u_d$, $u_q$, 103), das hinsichtlich einer an die Wicklung angelegten Spannung indikativ ist;
Umwandeln des Stroms und der Spannung in Größen eines d-q-Koordinatensystems, wobei die d-Achse synchron mit dem Rotor rotiert und die q-Achse senkrecht zu der d-Achse ist;
Aufstellen einer Gleichung für die d-Komponente ($u_d$) der Spannung in Abhängigkeit von
der d-Komponente ($i_d$) des Stroms;
einer Zeitableitung der d-Komponente ($i_d$) des Stroms; und
einem Term, der eine Zeitableitung der d-Komponente ($\Psi_{rd}$) eines Magnetflusses des magnetischen Bereichs und der q-Komponente ($\Psi_{rq}$) des Magnetflusses des magnetischen Bereichs umfasst;
Aufstellen einer Gleichung für die q-Komponente ($u_q$) der Spannung in Abhängigkeit von
der q-Komponente des Stroms ($i_q$);

der d-Komponente des Stroms ($i_d$);
einer Zeitableitung der q-Komponente ($i_q$) des Stroms; und
einem Term, der eine Zeitableitung der q-Komponente ($\Psi_{rq}$) des Magnetflusses des magnetischen Bereichs und der d-Komponente ($\Psi_{rd}$) des Magnetflusses des magnetischen Bereichs umfasst, wodurch er höhere Harmonische des Stroms und des Magnetflusses berücksichtigt;
Schätzen einer d-Komponente und einer q-Komponente einer gegenelektromotorischen Kraft ($e_d$, $e_q$) auf der Basis der Ströme ($i_d$, $i_q$) und der ermittelten Spannungen ($u_d$, $u_q$) in dem d-q-Koordinatensystem; und
Ableiten des Drehmoments ($T_e$) auf der Basis der geschätzten gegenelektromotorischen Kraft ($e_d$, $e_q$) in dem d-q-Koordinatensystem und des Stromsignals ($i_d$, $i_q$) in dem d-q-Koordinatensystem.

2. Verfahren nach Anspruch 1, wobei die gegenelektromotorische Kraft ($e_d$, $e_q$) einen Term eines Magnetflusses ($\Psi_{rd}$, $\Psi_{rq}$) des magnetischen Bereichs und einen Term einer Zeitableitung des Magnetflusses ($\Psi_{rd}$, $\Psi_{rq}$) umfasst.

3. Verfahren nach Anspruch 2, wobei der Term der Zeitableitung des Magnetflusses ($\Psi_{rd}$, $\Psi_{rq}$) nicht sinusförmigen Strom und Magnetfluss berücksichtigt.

4. Verfahren nach einem der Ansprüche 1 bis 3,
wobei die d-Komponente ($e_d$) der gegenelektromotorischen Kraft einen Term der q-Komponente ($\Psi_{rq}$) des Magnetflusses und einen Term einer Zeitableitung der d-Komponente ($\Psi_{rd}$) des Magnetflusses umfasst,
wobei die q-Komponente ($e_q$) der gegenelektromotorischen Kraft einen Term der d-Komponente ($\Psi_{rd}$) des Magnetflusses und einen Term einer Zeitableitung der q-Komponente ($\Psi_{rq}$) des Magnetflusses und einen Term der d-Komponente ($i_d$) des Stroms, multipliziert mit einer Differenz ($L_d$-$L_q$) zwischen der d-Komponente ($L_d$) und der q-Komponente ($L_q$) einer Induktivität der Wicklung, umfasst.

5. Verfahren nach einem der Ansprüche 1 bis 4,
wobei das Drehmoment ($T_e$) so abgeleitet wird, dass es proportional zur Summe
der q-Komponente ($e_q$) der geschätzten
gegenelektromotorischen Kraft, multipliziert mit der q-Komponente ($i_q$) des Stroms, und
der d-Komponente ($e_d$) der geschätzten
gegenelektromotorischen Kraft, multipliziert mit der d-Komponente ($i_d$) des Stroms,
ist.

6. Verfahren nach einem der Ansprüche 3 bis 5,
wobei das Schätzen der gegenelektromotorischen Kraft umfasst:

   Verwenden eines Zustandsbeobachter-Verfahrens, insbesondere Anwendung eines Gleitmodus-Beobachters.

7. Verfahren nach Anspruch 6, wobei das Verwenden des Zustandsbeobachter-Verfahrens umfasst:

   Erstellen eines Zustandsvektors (x), der Strom und gegenelektromotorische Kraft enthält, insbesondere unter Berücksichtigung der gegenelektromotorischen Kraft sechster Ordnung ($e_{d6f}$, $e_{q6f}$).

8. Verfahren nach Anspruch 6 oder 7,
wobei das Verwenden des Zustands umfasst:

   Aufstellen einer Differentialgleichung (eq.25) in dem Zustandsvektor (x), wobei die Differentialgleichung die Spannung (u) enthält.

9. Verfahren nach Anspruch 8, welches ferner umfasst:

   Lösen der Differentialgleichung für den Zustandsvektor (x), um die gegenelektromotorische Kraft ($e_d$, $e_q$) abzuleiten.

10. Verfahren nach einem der vorhergehenden Ansprüche,
wobei sich das Stromsignal (105, 107, $i_d$, $i_q$) auf einen gemessenen Strom bezieht, insbesondere einen gemessenen Dreiphasenstrom,
wobei sich das Spannungssignal (103, u) insbesondere auf eine angeforderte oder gemessene Spannung bezieht, ferner insbesondere auf eine Dreiphasenspannung.

**11.** Verfahren nach einem der vorhergehenden Ansprüche, wobei das Schätzen des Drehmoments ferner auf Parametern der Synchronmaschine basiert, insbesondere auf Induktivitäten in der d-Achse ($L_d$) und q-Achse ($L_q$) der Wicklung und/oder dem Widerstand ($R_s$) der Wicklung und/oder der mechanischen Rotordrehzahl ($\omega_m$).

**12.** Verfahren zur Steuerung einer elektromagnetischen Synchronmaschine (101), die einen Stator mit mindestens einer Wicklung und einen Rotor, der einen während des Betriebs magnetischen Bereich aufweist, umfasst, wobei das Verfahren umfasst:

Schätzen eines Drehmoments ($T_e$) gemäß einem Verfahren nach einem der vorhergehenden Ansprüche sofort während des Betriebs;
Ableiten einer Spannung auf der Basis des geschätzten Drehmoments, um eine Drehmomentwelligkeit zu verringern; und
Anlegen der Spannung an die Wicklung des Stators.

**13.** Anordnung (400) zur Schätzung eines Drehmoments ($T_e$) für eine elektromagnetische Synchronmaschine (101), die einen Stator mit mindestens einer Wicklung und einen Rotor, der einen während des Betriebs magnetischen Bereich aufweist, umfasst, wobei die Anordnung umfasst:

eine Eingangsklemme (401) die dazu eingerichtet ist,
ein Stromsignal ($i_d$, $i_q$, 405, 407) zu empfangen, das hinsichtlich eines in der Wicklung fließenden elektrischen Stroms indikativ ist, und
ein Spannungssignal ($u_d$, $u_q$, 403) zu empfangen, das hinsichtlich einer an die Wicklung angelegten Spannung indikativ ist; und
einen Prozessor (409), der dazu eingerichtet ist,
den Strom und die Spannung in Größen eines d-q-Koordinatensystems umzuwandeln, wobei die d-Achse synchron mit dem Rotor rotiert und die q-Achse senkrecht zu der d-Achse ist,
eine Gleichung für die d-Komponente ($u_d$) der Spannung in Abhängigkeit von
der d-Komponente ($i_d$) des Stroms;
einer Zeitableitung der d-Komponente ($i_d$) des Stroms; und
einem Term, der eine Zeitableitung der d-Komponente ($\Psi_{rd}$) eines Magnetflusses des magnetischen Bereichs und der q-Komponente ($\Psi_{rq}$) des Magnetflusses des magnetischen Bereichs umfasst,
zu erstellen;
eine Gleichung für die q-Komponente ($u_q$) der Spannung in Abhängigkeit von
der q-Komponente des Stroms ($i_q$);
der d-Komponente des Stroms ($i_d$);
einer Zeitableitung der q-Komponente ($i_q$) des Stroms; und
einem Term, der eine Zeitableitung der q-Komponente ($\Psi_{rq}$) des Magnetflusses des magnetischen Bereichs und der d-Komponente ($\Psi_{rd}$) des Magnetflusses des magnetischen Bereichs umfasst, wodurch er höhere Harmonische des Stroms und des Magnetflusses berücksichtigt,
zu erstellen;
eine d-Komponente und eine q-Komponente einer gegenelektromotorischen Kraft ($e_d$, $e_q$) auf der Basis der Ströme ($i_d$, $i_q$) und der ermittelten Spannungen ($u_d$, $u_q$) in dem d-q-Koordinatensystem zu schätzen; und
ein Drehmoment ($T_e$) auf der Basis der geschätzten gegenelektromotorischen Kraft ($e_d$, $e_q$) in dem d-q-Koordinatensystem und des Stromsignals ($i_d$, $i_q$) in dem d-q-Koordinatensystem abzuleiten.

**Revendications**

**1.** Procédé (100) d'estimation d'un couple pour une machine (101) électromagnétique synchrone comprenant un stator ayant au moins un enroulement et un rotor ayant, en fonctionnement, une région magnétique, le procédé comprenant :

la réception d'un signal de courant ($i_d$, $i_q$, 105, 107) indicateur d'un courant électrique passant dans l'enroulement ;
la réception d'un signal de tension ($u_d$, $u_q$, 103) indicateur d'une tension appliquée à l'enroulement ;
la transformation du courant et de la tension en des quantités d'un système de coordonnées d-q, dans lequel l'axe d tourne de façon synchrone avec le rotor et l'axe q est perpendiculaire à l'axe d ;
l'établissement d'une équation pour la composante d ($u_d$) de la tension en fonction

de la composante d ($i_d$) du courant ;

d'une dérivée en temps de la composante d ($i_d$) du courant ; et

d'un terme comprenant une dérivée en temps de la composante d ($\psi_{rd}$) d'un flux magnétique de la région magnétique et de la composante q ($\psi_{rq}$) du flux de la région magnétique ;

l'établissement d'une équation pour la composante q ($u_q$) de la tension en fonction

de la composante q du courant ($i_q$) ;

de la composante d du courant ($i_d$) ;

d'une dérivée en temps de la composante q ($i_q$) du courant ; et

d'un terme comprenant une dérivée en temps de la composante q ($\psi_{rq}$) du flux magnétique de la région magnétique et de la composante d ($\psi_{rd}$) du flux de la région magnétique, prenant ainsi en compte des harmoniques supérieures de courant et de flux magnétique ;

l'estimation d'une composante d et d'une composante q d'une force contre-électromotrice ($e_d$, $e_q$) sur la base des courants ($i_d$, $i_q$) et des tensions ($u_d$, $u_q$ établies dans le système de coordonnées d-q ; et

la dérivation du couple ($T_e$) sur la base de la force contre-électromotrice ($e_d$, $e_q$) estimée dans le système de coordonnées d-q et du signal de courant ($i_d$, $i_q$) dans le système de coordonnées d-q.

2. Procédé selon la revendication 1, dans lequel la force contre-électromotrice ($e_d$, $e_q$) comprend un terme d'un flux magnétique ($\psi_{rd}$, $\psi_{rq}$) de la région magnétique et un terme d'une dérivée en temps du flux magnétique ($\psi_{rd}$, $\psi_{rq}$).

3. Procédé selon la revendication 2, dans lequel le terme de la dérivée en temps du flux magnétique ($\psi_{rd}$, $\psi_{rq}$) prend en compte un courant et un flux magnétique non sinusoïdaux.

4. Procédé selon l'une des revendications 1 à 3,
dans lequel la composante d ($e_d$) de la force contre-électromotrice comprend un terme de la composante q ($\psi_{rq}$) du flux magnétique et un terme d'une dérivée en temps de la composante d ($\psi_{rd}$) du flux magnétique,
dans lequel la composante q ($e_q$) de la force contre-électromotrice comprend un terme de la composante d ($\psi_{rd}$) du flux magnétique et un terme d'une dérivée en temps de la composante q ($\psi_{rq}$) du flux magnétique et un terme de la composante d ($i_d$) du courant multipliée par une différence ($L_d$-$L_q$) entre la composante d ($L_d$) et la composante q ($L_q$) d'une inductance de l'enroulement.

5. Procédé selon l'une des revendications 1 à 4,
dans lequel le couple ($T_e$) est dérivé de façon à être proportionnel à la somme
de la composante q ($e_q$) de la force contre-électromotrice estimée fois la composante q ($i_q$) du courant et
de la composante d ($e_d$) de la force contre-électromotrice estimée fois la composante d ($i_d$) du courant.

6. Procédé selon l'une des revendications 3 à 5,
dans lequel l'estimation de la force contre-électromotrice comprend :

l'emploi d'une technique d'observateur d'état, en particulier une application d'un observateur de mode de glissement.

7. Procédé selon la revendication 6, dans lequel l'emploi de la technique d'observateur d'état comprend :

l'établissement d'un vecteur d'état (x) incluant un courant et une force contre-électromotrice, en particulier prenant en compte une force contre-électromotrice de sixième ordre ($e_{d6f}$, $e_{q6f}$).

8. Procédé selon la revendication 6 ou 7,
dans lequel l'emploi de l'état comprend :

l'établissement d'une équation différentielle (éq. 25) dans le vecteur d'état (x), dans lequel l'équation différentielle inclut la tension (u).

9. Procédé selon la revendication 8, comprenant en outre :

la résolution de l'équation différentielle pour le vecteur d'état (x), afin de dériver la force contre-électromotrice ($e_d$, $e_q$).

10. Procédé selon l'une des revendications précédentes,

dans lequel le signal de courant (105, 107, $i_d$, $i_q$) se rapporte à un courant mesuré, en particulier un courant triphasé mesuré,

dans lequel le signal de tension (103, u) se rapporte en particulier à une tension demandée ou mesurée, en outre en particulier à une tension triphasée.

**11.** Procédé selon l'une des revendications précédentes, dans lequel l'estimation du couple est en outre basée sur des paramètres de la machine synchrone, en particulier des inductances dans l'axe d ($L_d$) et l'axe q ($L_q$) d'enroulement et/ou une résistance ($R_s$) d'enroulement et/ou une vitesse mécanique de rotor ($\omega_m$).

**12.** Procédé de commande d'une machine (101) électromagnétique synchrone comprenant un stator ayant au moins un enroulement et un rotor ayant, en fonctionnement, une région magnétique, le procédé comprenant :

l'estimation d'un couple ($T_e$) conformément à un procédé selon l'une des revendications précédentes instantanément en fonctionnement ;

la dérivation d'une tension sur la base du couple estimé, afin de limiter une ondulation de couple ; et

l'application de la tension à l'enroulement du stator.

**13.** Agencement (400) pour estimer un couple ($T_e$) pour une machine (101) électromagnétique synchrone comprenant un stator ayant au moins un enroulement et un rotor ayant, en fonctionnement, une région magnétique, l'agencement comprenant :

une borne (401) d'entrée adaptée

à recevoir un signal de courant ($i_d$, $i_q$, 405, 407) indicateur d'un courant électrique passant dans l'enroulement ;

à recevoir un signal de tension ($u_d$, $u_q$, 403) indicateur d'une tension appliquée à l'enroulement ; et

un processeur (409) adapté

à transformer le courant et la tension en des quantités d'un système de coordonnées d-q, dans lequel l'axe d tourne de façon synchrone avec le rotor et l'axe q est perpendiculaire à l'axe d,

à établir une équation pour la composante d ($u_d$) de la tension en fonction

de la composante d ($i_d$) du courant ;

d'une dérivée en temps de la composante d ($i_d$) du courant ; et

d'un terme comprenant une dérivée en temps de la composante d ($\psi_{rd}$) d'un flux magnétique de la région magnétique et de la composante q ($\psi_{rq}$) du flux de la région magnétique ;

à établir une équation pour la composante q ($u_q$) de la tension en fonction

de la composante q du courant ($i_q$) ;

de la composante d du courant ($i_d$) ;

d'une dérivée en temps de la composante q ($i_q$) du courant ; et

d'un terme comprenant une dérivée en temps de la composante q ($\psi_{rq}$) du flux magnétique de la région magnétique et de la composante d ($\psi_{rd}$) du flux de la région magnétique, prenant ainsi en compte des harmoniques supérieures de courant et de flux magnétique ;

à estimer une composante d et une composante q d'une force contre-électromotrice ($e_q$, $e_d$) sur la base des courants ($i_d$, $i_q$) et des tensions ($u_d$, $u_q$) établies dans le système de coordonnées d-q, et

à dériver un couple ($T_e$) sur la base de la force contre-électromotrice ($e_d$, $e_q$) estimée dans le système de coordonnées d-q et du signal de courant ($i_d$, $i_q$) dans le système de coordonnées d-q.

FIG 1

FIG 2

FIG 3

300

303

205

Torque

0

0    Time    t

301

FIG 4

400

401    405, 407    409    T$_e$

403

## REFERENCES CITED IN THE DESCRIPTION

### Patent documents cited in the description

- US 8080956 B2
- US 20120146559 A1

### Non-patent literature cited in the description

- **LIU et al.** Instantaneous torque estimation in sensorless direct torque controlled brushless DC motor. *Conference Record of the 2005 IEEE Industry Applications Conference,* 02 October 2005, vol. 3, 2140-2146
- **LIU et al.** Direct torque control of brushless DC drives with reduced torque ripple. *39th IAS Annual Meeting, Conference Record of the 2004 IEEE,* 03 October 2004, vol. 4, 2390-2396